# EUROPÄISCHE PATENTSCHRIFT

(11) **EP 3 431 788 B1**
(45) Veröffentlichungstag und Bekanntmachung des Hinweises auf die Patenterteilung: **12.02.2020**
(21) Anmeldenummer: 18000516.7
(22) Anmeldetag: 13.06.2018
(51) Int. Cl.: F16C 17/02, F16C 33/14

(54) **BUNDLAGERSCHALE UND HERSTELLVERFAHREN DAFÜR**
COLLAR BEARING TRAY AND METHOD FOR PRODUCING SAME
COQUILLE DE COUSSINET DE PALIER À BRIDE ET PROCÉDÉ DE FABRICATION CORRESPONDANT

(30) Priorität: 08.07.2017 DE 102017006468
(43) Veröffentlichungstag der Anmeldung: 23.01.2019
(73) Patentinhaber: Wieland-Werke AG, 89079 Ulm (DE)
(72) Erfinder: Voggeser, Volker, 89250 Senden (DE); Thumm, Gerhard, 89155 Erbach (DE)

(56) Entgegenhaltungen:
- WO-A1-02/070908
- AT-B- 409 408
- DE-A1- 1 525 046
- DE-A1- 1 750 877
- DE-A1- 2 224 868
- DE-A1- 4 008 671
- DE-B- 1 232 002
- DE-C- 675 607
- DE-C- 726 897
- DE-U1-202009 002 011

## Beschreibung

Die Erfindung betrifft eine Bundlagerschale sowie zwei Verfahren zur Herstellung von Bundlagerschalen.

Bundlagerschalen weisen einen halbzylindrischen Radiallagerbereich sowie mindestens einen Flansch in Form eines Ringscheibensegments auf, welcher sich in axialer Richtung an den Radiallagerbereich anschließt. Der Flansch bildet einen Axiallagerbereich. Üblicherweise umfassen Bundlagerschalen zwei Flansche. Statt Bundlagerschalen ist auch der Begriff Flanschlagerschalen gebräuchlich.

In vielen Fällen besteht eine Bundlagerschale aus einem Stützkörper aus Stahl, auf den zumindest im halbzylindrischen Radiallagerbereich eine Auflage oder eine Beschichtung aus einem Lagerwerkstoff aufgebracht ist.

Es ist bekannt, Bundlagerschalen aus einzelnen Teilen herzustellen, indem die Teile, die die Flansche bilden, und das Teil, das den halbzylindrischen Radiallagerbereich bildet, separat bereitgestellt und dann zu einer Bundlagerschale zusammengebaut werden. Die Verwendung mehrerer Teile ermöglicht eine flexible Anpassung der einzelnen Teile an die jeweiligen Anforderungen, die Komplexität des Herstellverfahrens wird jedoch erhöht.

Bei einem alternativen Herstellungsverfahren wird aus einer geeignet konfektionierten Platine durch zwei Biegeschritte eine Bundlagerschale hergestellt. Zum Stand der Technik wird auf die Druckschriften DE 675 607, DE 726 897, DE 1 232 002 A1, DE 40 08 671 A1, US 3,361,502 und DE 1 750 877 A1 verwiesen. DE 20 2009 002 011 U1 zeigt eine Bundlagerschale gemäß dem Oberbegriff des Anspruchs 1. In einem der beiden Biegeschritte werden zwei parallel verlaufende, streifenförmige Randbereiche der Platine rechtwinklig umgebogen. Aus diesen Randbereichen werden die Flansche gebildet. Die Platine kann aus einem Monowerkstoff bestehen. In diesem Fall bildet dieser Werkstoff sowohl den Radiallagerbereich als auch die Flansche. Bei einer anderen Ausführungsform kann die Platine als Werkstoffverbund aus einem Substrat und einer darauf einseitig aufgebrachten Auflage oder Beschichtung ausgeführt sein. Bei dieser Ausführungsform werden zur Bildung der Flansche zwei streifenförmige Randbereiche des Substrats rechtwinklig umgebogen, so dass das Substrat ein U-Profil bildet. Die Flansche umfassen damit mindestens den Werkstoff des Substrats. Die Auflage kann auf den Flanschen ebenfalls vorhanden sein oder sie wird im Bereich der Flansche vom Substrat entfernt.

Das Substrat bildet den Stützkörper der Bundlagerschale und weist deshalb üblicherweise eine Dicke von mindestens 1 mm auf. Folglich weisen die Flansche, die aus den umgebogenen Randbereichen des Substrats gebildet sind, ebenfalls eine entsprechend große Dicke auf. Aufgrund der verglichen mit dem Radiallagerbereich geringeren Belastungen im Bereich der Flansche ist der Materialeinsatz dort nicht zwingend erforderlich. Bei derartigen Bundlagerschalen wird also mehr Material als notwendig verbraucht, was sich nachteilhaft auf Kosten, Gewicht und Platzbedarf der Bundlagerschalen auswirkt.

Der Erfindung liegt die Aufgabe zugrunde, eine hinsichtlich Materialeinsatz, Gewicht und Platzbedarf verbesserte Bundlagerschale sowie Verfahren zur Herstellung einer solchen Bundlagerschale anzugeben.

Die Erfindung wird bezüglich einer Bundlagerschale durch die Merkmale des Anspruchs 1, bezüglich eines ersten Verfahrens durch die Merkmale des Anspruchs 10 und bezüglich eines zweiten Verfahrens durch die Merkmale des Anspruchs 11 wiedergegeben. Die weiteren rückbezogenen Ansprüche betreffen vorteilhafte Aus- und Weiterbildungen der Erfindung.

Die Erfindung schließt eine Bundlagerschale mit einem halbzylindrischen Lagerbereich ein, durch welchen eine Axialrichtung, eine Radialrichtung und eine Umfangsrichtung definiert werden. Der halbzylindrische Lagerbereich umfasst einen aus einem ersten Werkstoff gebildeten Stützkörper und eine mit dem Stützkörper flächig verbundene, in Radialrichtung innen liegende Auflage aus einem zweiten Werkstoff, welcher weicher als der erste Werkstoff ist. Der Stützkörper ist aus einem zu einer halbzylindrischen Schale gebogenen Streifen gebildet. Der Streifen weist dabei einen im Wesentlichen rechteckigen Querschnitt auf und ist in Axialrichtung durch Längskanten begrenzt. Die Längskanten sind somit zugleich die Längskanten des Stützkörpers. Erfindungsgemäß weist die Auflage jeweils einen aus dem zweiten Werkstoff bestehenden Überstand in Axialrichtung über die Längskanten des Stützkörpers auf, wobei die Überstände in Radialrichtung nach außen derart umgebogen sind, dass sie sich in Radialrichtung über den Stützkörper hinaus erstrecken und so aus den Überständen der Auflage Flansche gebildet sind, die sich jeweils in Axialrichtung an den halbzylindrischen Lagerbereich anschließen. Die Flansche haben im Wesentlichen die Form von Segmenten von Ringscheiben. Sie erstrecken sich in Radial- und Umfangsrichtung, wobei die Erstreckung in Umfangsrichtung nahezu gleich der Erstreckung der Bundlagerschale in Umfangsrichtung ist. Die Flansche bilden somit axiale Anlaufflächen, also Axiallagerbereiche.

Die Erfindung geht dabei von der Überlegung aus, dass die Belastung eines Bundlagers im Radiallagerbereich wesentlich höher als in den Axiallagerbereichen ist. Im Radiallagerbereich wird ein Stützkörper benötigt, um der Lagerschale im eingebauten Zustand die notwendige Formstabilität zu verleihen. Deshalb wird der Stützkörper aus einem Werkstoff mit hoher Festigkeit gefertigt. Der Stützkörper liegt in Form eines gebogenen Streifens vor, der einen im Wesentlichen rechteckigen Querschnitt aufweist. Im Wesentlichen bedeutet in diesem Zusammenhang, dass Querschnittsformen, die technisch bedingte Abweichungen von der exakten Form eines Rechtecks aufweisen, wie beispielsweise abgerundete Ecken oder leicht gekrümmte Seiten, eingeschlossen sind. Der Streifen weist eine Breite B und eine Dicke S auf. Durch diese Abmessungen wird sein rechteckiger Querschnitt definiert. Der Streifen ist zu einer halbzylindrischen Schale gebogen, wobei seine Längskanten nahezu einen Halbkreis beschreiben. Die Biegeachse ist also so gewählt, dass die Längskanten den Stützkörper in Axialrichtung begrenzen. Der Stützkörper weist üblicherweise eine Bogenlänge L auf, die einem Umfangswinkel von geringfügig mehr als dem im eingebauten Zustand angestrebten Umfangswinkel entspricht. Diese Überlänge des Stützkörpers bewirkt, dass beim Einbau in das Lager zwei gegenüberliegende Lagerschalen derart gegeneinander verspannt werden, dass sie einen festen Presssitz im Lager haben. Dadurch wird verhindert, dass sich die Lagerschale im Lager dreht. Der Werkstoff des Stützkörpers muss diesen Presssitz während des gesamten Betriebs des Lagers gewährleisten. Die Dicke S des Stützkörpers beträgt bevorzugt zwischen 1 und 2 mm.

Der Stützkörper ist auf seiner in Radialrichtung innen liegenden Oberfläche mit einer Auflage verbunden. Der Radiallagerbereich ist somit als Werkstoffverbund ausgeführt. Die Auflage umfasst einen Werkstoff, der weicher als der Werkstoff des Stützkörpers ist, und sie verbessert die Gleiteigenschaften des Lagers. Insbesondere dient die Auflage dazu, Partikel, die zwischen die Laufflächen des Lagers gelangen können, einzubetten und so eine Beschädigung des Lagers zu verhindern. Die Dicke s der Auflage beträgt im Bereich des Stützkörpers bevorzugt zwischen 0,2 und 0,7 mm.

Die Auflage weist in Umfangsrichtung die gleiche Bogenlänge wie der Stützkörper auf, sie ist jedoch breiter als der Streifen, aus dem der Stützkörper des halbzylindrischen Lagerbereichs gebildet ist. Die Auflage ist derart mit dem Stützkörper verbunden, dass sie beidseitig in Axialrichtung jeweils einen monolithischen Überstand über die Längskanten des Stützkörpers aufweist. Die Überstände sind jeweils um ungefähr 90° in Radialrichtung nach außen über die in Radialrichtung innen liegenden Längskanten des Stützkörpers gebogen. Die radiale Erstreckung der umgebogenen Überstände reicht so weit über den Stützkörper hinaus, dass aus den umgebogenen Überständen der Auflage Flansche gebildet sind, die sich in Axialrichtung an den halbzylindrischen Lagerbereich anschließen. Die radiale Erstreckung der umgebogenen Überstände ist typischerweise ein Vielfaches der Dicke S des Stützkörpers. Da die Flansche aus den umgebogenen Überständen der Auflage gebildet sind, sind die Auflage und die Flansche monolithisch. Die gesamte Bundlagerschale, die Stützkörper und Auflage mit daraus gebildeten Flanschen umfasst, ist einstückig.

Die seitlich an den Radiallagerbereich angeordneten Flansche sind deutlich geringeren mechanischen Belastungen ausgesetzt als der Radiallagerbereich. Insbesondere müssen sie nicht die Funktionen erfüllen, die der Stützkörper im Radiallagerbereich erfüllt. Ihre Funktion entspricht der Funktion der Auflage im Radiallagerbereich. Deshalb ist es ausreichend, dass zur Bildung der Flansche kein Werkstoff verwendet wird, aus dem der Stützkörper gebildet ist. Die Abmessung der Flansche in Axialrichtung entspricht ungefähr der Dicke der Auflage im Radiallagerbereich. Die Flansche sind folglich deutlich dünner als der Werkstoffverbund im Radiallagerbereich. Wird eine erfindungsgemäße Lagerschale in einen Lagerstuhl eingebaut, dann liegt an der jeweils dem Lagerstuhl zugewandten Seite der Flansche der Werkstoff der Auflage direkt am Lagerstuhl an.

Der besondere Vorteil besteht darin, dass die Flansche den Werkstoff der Auflage, nicht jedoch den Werkstoff des Stützkörpers umfassen. Dies führt zur Einsparung von Material und damit zur Reduktion von Gewicht. Ferner sind die erfindungsgemäßen Bundlagerschalen schmaler als Bundlagerschalen, bei denen die axialen Anlaufflächen aus dem Werkstoff des Stützkörpers oder aus einem dem Radiallagerbereich entsprechenden Werkstoffverbund gebildet sind. Sie benötigen damit weniger Raum.

Die erfindungsgemäßen Bundlagerschalen werden bevorzugt als Gleitlager eingesetzt. Insbesondere kann eine erfindungsgemäße Bundlagerschale als Hauptlagerschale für Kurbelwellen eingesetzt werden. Andere bevorzugte Verwendungen umfassen Lager für die Welle von Kompressoren.

In bevorzugter Ausgestaltung der Erfindung können die Längskanten des Stützkörpers, die der Auflage zugewandt sind, verrundet sein. Dabei kann der Rundungsradius 0,5 bis 2 mm betragen. Durch die Verrundung der in Radialrichtung innen liegenden Längskanten des Stützkörpers lassen sich die Überstände der Auflage gut über die Längskanten biegen. Die Spannungen innerhalb des Materials der Auflage bleiben gering. Die Bildung von unerwünschten Rissen wird vermieden.

Vorteilhafterweise kann auf dem zweiten Werkstoff zumindest partiell eine Beschichtung aufgebracht sein. Hierdurch werden die Gleiteigenschaften des Lagers verbessert. Insbesondere kann die Beschichtung das Einlaufverhalten des Lagers positiv beeinflussen. Die Beschichtung kann sowohl im Radiallagerbereich als auch im Axiallagerbereich aufgebracht sein. Ebenso ist es möglich, die Beschichtung nur partiell auf der Oberfläche des Lagers aufzubringen. Insbesondere können der Radiallagerbereich und der Axiallagerbereich unterschiedliche Beschichtungen aufweisen. Die Beschichtungen können dann speziell auf die jeweiligen Anforderungen in den jeweiligen Lagerbereichen angepasst sein.

Bei einer vorteilhaften Ausführungsform der Erfindung können der Stützkörper und die Auflage stoffschlüssig miteinander verbunden sein. Dadurch wird ein zuverlässiger Werkstoffverbund realisiert. Bei metallischen Werkstoffen kann ein solcher Werkstoffverbund kann durch Löten, Schweißen oder Plattieren hergestellt werden. Alternativ kann der Werkstoffverbund durch Kleben hergestellt werden.

In bevorzugter Ausgestaltung der Erfindung kann der erste Werkstoff ein Stahlwerkstoff sein. Stahlwerkstoffe erfüllen das Anforderungsprofil, welches an einen Werkstoff für den Stützkörper gestellt ist. Sie weisen eine hohe Festigkeit und Temperaturbeständigkeit auf. Alternativ können auch andere Werkstoffe mit ähnlicher Charakteristik eingesetzt werden, beispielsweise Nickelbasiswerkstoffe.

Bei einer vorteilhaften Ausführungsform der Erfindung kann der zweite Werkstoff ein metallischer Lagerwerkstoff sein. Metallische Lagerwerkstoffe zeichnen sich durch eine hohe Beständigkeit gegen abrasiven Verschleiß und eine große Duktilität bei gleichzeitig guter Festigkeit und Härte aus. Aufgrund der großen Duktilität kann der Lagerwerkstoff Partikel, die zwischen die Lagerflächen der beiden Reibpartner gelangen, aufnehmen und schütz somit das Lager vor Zerstörung. Insbesondere kann der Lagerwerkstoff eine Kupferlegierung oder eine Aluminiumlegierung sein.

Bevorzugte Kupferlegierungen sind hierbei:
1. Eine Kupferlegierung mit der Zusammensetzung:

| | |
|---|---|
| Cu: | 62,0 - 67,0 Gew.-% |
| Fe: | 0,1 - 1,0 Gew.-% |
| Al: | 0,5 - 1,5 Gew.-% |
| Mn: | 1,5 - 2,5 Gew.-% |
| Ni: | 0,2 - 1,0 Gew.-% |
| Si: | 0,5 - 1,5 Gew.-% |
| Zn: | Rest, sowie unvermeidbare Verunreinigungen |

2. Eine Kupferlegierung mit folgender Zusammensetzung

| | |
|---|---|
| Sn: | 4,5 - 6,5 Gew.-% |
| Ni: | 5,0 - 7,0 Gew.-% |
| Cu: | Rest, sowie unvermeidbare Verunreinigungen |

Bevorzugte Aluminiumlegierungen sind hierbei AlSn6 und AlSn20.

In besonders vorteilhafter Ausgestaltung der Erfindung können bei Verwendung eines Lagermetalls als Werkstoff für die Auflage der Stützkörper und die Auflage durch Plattieren miteinander verbunden sein. Insbesondere kann dann der Werkstoff des Stützkörpers ein Stahlwerkstoff sein. Plattieren ist ein besonders günstiges und präzises Verfahren zu Herstellung eines Werkstoffverbunds. Beim Plattieren wird durch intermetallische Diffusion eine stoffschlüssige Verbindung zwischen den Werkstoffen von Stützkörper und Auflage realisiert.

Bei einer alternativen Ausführungsform kann der zweite Werkstoff ein Kunststoff sein. Für Lager mit geringer mechanischer und thermischer Belastung stellen Kunststoffe eine leichte und kostengünstige Alternative zu metallischen Lagerwerkstoffen dar.

Bei einer weiteren bevorzugten Ausgestaltung der Erfindung können die Flansche in Umfangsrichtung voneinander beabstandete Ausnehmungen aufweisen. Die Ausnehmungen erstrecken sich vom in Radialrichtung außen gelegenen Rand der Flansche in Radialrichtung nach innen. Sie können bis an die Auflage im Radiallagerbereich heranreichen. Durch die Ausnehmungen werden die Zug- und Streckspannungen, die bei der Herstellung der Lagerschale in den Flanschen auftreten, unterbrochen. Dadurch wird das Risiko einer Rissbildung in den Flanschen minimiert und die Planheit der Flansche wird verbessert.

Ein weiterer Aspekt der Erfindung schließt ein erstes Verfahren zur Herstellung einer erfindungsgemäßen Bundlagerschale ein. Das Verfahren umfasst folgende Schritte:
a) Bereitstellen einer Platine, die einen ersten Steifen aus einem ersten Werkstoff und einen zweiten Streifen aus einem zweiten Werkstoff, der weicher als der erste Werkstoff ist, umfasst. Die Breite des zweiten Streifens ist dabei größer als die Breite des ersten Streifens. Die beiden Streifen sind mit zueinander parallel verlaufenden Rändern derart miteinander flächig verbunden, dass der zweite Streifen jeweils einen Überstand über die beiden Längskanten des ersten Streifens aufweist und dass der erste Streifen im Wesentlichen vollflächig mit dem zweiten Streifen im Bereich zwischen dessen Überständen verbunden ist. Folglich weist die Platine einen zentralen Bereich auf, der als Werkstoffverbund ausgebildet ist.
b) Profilieren der Platine durch rechtwinkliges Umbiegen der Überstände des zweiten Streifens über die Längskanten des ersten Streifens, so dass aus den umgebogenen Überständen Schenkel gebildet werden, zwischen denen sich der erste Streifen befindet.
c) Biegen der profilierten Platine aus Schritt b) zu einer Bundlagerschale mit einem halbzylindrischen Lagerbereich und mit zwei Flanschen, wobei der halbzylindrische Lagerbereich aus dem zentralen Bereich der Platine gebildet wird und die Flansche aus den umgebogenen Überständen des zweiten Streifens gebildet werden.

Das erfindungsgemäße Herstellverfahren verwendet eine Platine, die einen speziellen Verbund aus zwei verschiedenen Werkstoffen darstellt. Die beiden Werkstoffe liegen dabei in Streifenform vor. Die beiden Werkstoffstreifen sind gleich lang. Die Breite des zweiten Streifens, der aus dem weicheren Werkstoff gebildet ist, ist größer als die Breite des ersten Streifens. Die Dicke des ersten Streifens ist größer als die Dicke des zweiten Streifens. Die Dicke des ersten Werkstoffstreifens kann zwischen 1 und 2 mm betragen. Die beiden Werkstoffstreifen sind flächig mit zueinander parallel verlaufenden Rändern miteinander verbunden. Die Verbindung erfolgt dabei in einer Weise, dass der zweite, breitere Streifen beidseitig einen Überstand über den ersten, schmäleren Streifen aufweist. Die laterale Erstreckung dieser Überstände des zweiten Streifens ist jeweils ein Mehrfaches der Dicke des ersten Streifens. Insbesondere können die beidseitigen Überstände symmetrisch ausgebildet sein. Bezüglich ihrer Erstreckung in Längsrichtung sind beide Streifen bündig miteinander verbunden. Der erste Streifen ist somit im Wesentlichen vollflächig mit dem zweiten Streifen verbunden, während der zweite Streifen nur in dem Bereich zwischen den Überständen mit dem ersten Streifen verbunden ist. Die Formulierung "im Wesentlichen vollflächig" bedeutet in diesem Zusammenhang, dass der zweite Streifen den ersten Streifen geometrisch vollflächig überdeckt, eine Verbindung jedoch nicht in jedem Punkt der Überdeckung vorhanden sein muss. So können insbesondere in den Randbereichen des ersten Streifens nicht miteinander verbundenen Teilbereiche vorhanden sein. Die Platine weist damit zwischen den Überständen des zweiten Streifens, also partiell, einen Bereich auf, der als Werkstoffverbund ausgebildet ist. Die Dicke des zweiten Werkstoffstreifens kann im Bereich des Werkstoffverbunds zwischen 0,2 und 0,7 mm betragen. Im Bereich der Überstände kann die Dicke des zweiten Werkstoffstreifes etwas größer als im Bereich des Werkstoffverbunds sein. Typischerweise kann sie dort um 5 bis 30 % größer sein. Dieser Unterschied in der Dicke kann seine Ursache in dem zum Verbinden der beiden Werkstoffstreifen verwendeten Plattierprozess haben.

Die Platine wird zu einem U-Profil gebogen, indem die beiden Überstände des zweiten Streifens über die Längskanten des ersten Streifens gebogen werden. Beide Überstände werden dabei um ungefähr 90° gebogen, so dass ein U-Profil mit parallelen Schenkeln entsteht. Der als Werkstoffverbund ausgebildete, zentrale Bereich der Platine bildet die ebene Basis des U-Profils. Dabei befindet sich der erste Streifen zwischen den beiden Schenkeln des U-Profils, so dass die Längsseiten des ersten Streifens von den umgebogenen Überständen des zweiten Streifens bedeckt sind. Die beiden Schenkel erstrecken sich über die Dicke des ersten Streifens hinaus.

Das U-Profil wird in einem nächsten Schritt zu einer Bundlagerschale gebogen. Die Biegeachse steht dabei senkrecht auf den Ebenen, die durch die umgebogenen Überständen definiert werden, und der Biegewinkel beträgt bevorzugt ungefähr 180°. Die Biegerichtung ist dabei so gewählt, dass sich der erste Streifen nach dem Biegen in Radialrichtung außen befindet. Somit wird aus dem zentralen Bereich der Platine, der als Werkstoffverbund ausgebildet ist, der halbzylindrische Radiallagerbereich gebildet. Dabei stellt der erste Streifen den Stützkörper der Lagerschale dar und der nicht über die Längskanten des ersten Streifens umgebogene Bereich des zweiten Streifens stellt eine in Radialrichtung innen liegende Auflage auf dem Stützkörper dar. Aus den umgebogenen Überständen des zweiten Streifens werden Flansche gebildet, die sich in Axialrichtung an den halbzylindrischen Radiallagerbereich anschließen. Die Flansche erstrecken sich scheibenförmig in Radial- und Umfangsrichtung und bilden axiale Anlaufflächen.

Ein weiterer Aspekt der Erfindung schließt ein zweites Verfahren zur Herstellung einer erfindungsgemäßen Bundlagerschale ein. Das Verfahren umfasst folgende Schritte:
a) Bereitstellen einer Platine, die einen ersten Steifen aus einem ersten Werkstoff und einen zweiten Streifen aus einem zweiten Werkstoff, der weicher als der erste Werkstoff ist, umfasst. Die Breite des zweiten Streifens ist dabei größer als die Breite des ersten Streifens. Die beiden Streifen sind mit zueinander parallel verlaufenden Rändern derart miteinander flächig verbunden, dass der zweite Streifen jeweils einen Überstand über die beiden Längskanten des ersten Streifens aufweist und dass der erste Streifen im Wesentlichen vollflächig mit dem zweiten Streifen im Bereich zwischen dessen Überständen verbunden ist. Folglich weist die Platine einen zentralen Bereich auf, der als Werkstoffverbund ausgebildet ist.
b) Biegen der Platine zu einer halbzylindrischen Schale mit einer Zylinderachse, so dass sich der erste Streifen bezogen auf die Zylinderachse in Radialrichtung außen befindet und dass sich der zentrale Bereich der Platine in Richtung der Zylinderachse zwischen den Überständen des zweiten Streifens befindet.
c) Rechtwinkliges Umbiegen der Überstände des zweiten Streifens über die Längskanten des ersten Streifens, so dass eine Bundlagerschale mit einem halbzylindrischen Lagerbereich und mit zwei Flanschen gebildet wird, wobei der halbzylindrische Lagerbereich aus dem zentralen Bereich der Platine gebildet wird und die Flansche aus den umgebogenen Überständen des zweiten Streifens gebildet werden.

Beim zweiten erfindungsgemäßen Herstellverfahren wird eine Platine verwendet, die wie die Platine gebildet ist, die im ersten erfindungsgemäßen Herstellverfahren verwendet wird. Die Platine wird zunächst zu einer halbzylindrischen Schale gebogen. Die Biegeachse steht dabei senkrecht auf den Ebenen, die durch die Längsseiten des ersten Streifens definiert werden. Dadurch ragen die Überstände des zweiten Streifens nach dem Biegevorgang in Axialrichtung über den als Werkstoffverbund ausgebildeten Bereich der Platine hinaus. Die Biegerichtung ist so gewählt, dass sich nach dem Biegevorgang der erste Streifen der Platine in Radialrichtung außen befindet. Der Biegewinkel beträgt bevorzugt ungefähr 180°.

In einem weiteren Schritt werden die Überstände des zweiten Streifens über die Längskanten des ersten Streifens rechtwinklig in Radialrichtung nach außen gebogen, so dass eine Bundlagerschale mit U-Profil geformt wird. Die ebene Basis des U-Profils wird dabei aus dem zentralen Bereich der Platine gebildet, der als Werkstoffverbund vorliegt. Aus dem zentralen Bereich der Platine wird somit der halbzylindrische Lagerbereich der Bundlagerschale gebildet. Dabei stellt der erste Streifen den Stützkörper der Lagerschale dar und der nicht über die Längskanten des ersten Streifens umgebogene Bereich des zweiten Streifens stellt eine in Radialrichtung innen liegende Auflage auf dem Stützkörper dar. Die umgebogenen Überstände des zweiten Streifens bilden Flansche, die sich in Axialrichtung an den halbzylindrischen Radiallagerbereich anschließen. Die Flansche erstrecken sich scheibenförmig in Radial- und Umfangsrichtung und bilden axiale Anlaufflächen. Die Flansche erstrecken sich in radialer Richtung deutlich über den Stützkörper hinaus.

Der besondere Vorteil der beiden erfindungsgemäßen Herstellverfahren besteht darin, dass zur Herstellung einer vorstehend beschriebenen, vorteilhaften Bundlagerschale lediglich ein einziges Werkstück als Ausgangsmaterial verwendet wird. Die Platine ist so gestaltet, dass alle Elemente einer Bundlagerschale mit material- und platzsparenden, schmalen Flanschen in einem Arbeitsprozess aus ihr geformt werden können. Aus dem speziell gewählten Werkstoffverbund der Platine kann durch wenige Arbeitsschritte eine einstückige Bundlagerschale mit unterschiedlich gestalteten Funktionsbereichen geformt werden. Die Funktionsbereiche der Bundlagerschale, namentlich Radiallagerbereich und Axiallagerbereich, können dabei gut an die jeweiligen Anforderungen angepasst werden.

In einer bevorzugten Ausführungsform der erfindungsgemäßen Herstellverfahren kann die Platine durch Ablängen eines Werkstoffverbundstreifens, dessen Profil identisch zum Profil der Platine ist, hergestellt werden. Dazu wird ein quasi endloser Werkstoffverbundstreifen verwendet, der analog zur Platine einen zentralen Bereich, der als Werkstoffverbund eines quasi endlosen ersten Streifens und eines quasi endlosen zweiten, breiteren Streifens ausgeführt ist, sowie beidseitig Überstände des zweiten Streifens über den ersten Streifens aufweist. Quasi endlos bedeutet in diesem Zusammenhang, dass die Länge des Werkstoffverbundstreifens ein Vielfaches der Länge einer Platine ist. Aus einem Werkstoffverbundstreifen kann somit durch Ablängen eine Vielzahl von Platinen gewonnen werden. Die Längsseiten des Werkstoffverbundstreifens bilden nach dem Ablängen die Längsseiten des zweiten Streifens der Platine, die Stirnflächen der Platine entstehen durch das Ablängen. Bevorzugt findet das Ablängen des Werkstoffverbundstreifens in der selben Vorrichtung statt, in der auch die weiteren Schritte zur Herstellung der Bundlagerschale, insbesondere die Biegeschritte stattfinden. Dies vereinfacht die Handhabung der Platine, da nicht jede Platine einzeln der Vorrichtung zugeführt werden muss, sondern das Ausgangsmaterial als quasi endloser Werkstoffverbundstreifen der Vorrichtung zugeführt werden kann.

Bevorzugt kann der erste Streifen der Platine aus einem Stahlwerkstoff und der zweite Streifen der Platine aus einem Lagerwerkstoff, wie beispielsweise einer Kupfer- oder Aluminiumlegierung bestehen. Bei einer solchen Werkstoffpaarung ist es besonders vorteilhaft, wenn der Werkstoffverbundstreifen, aus dem die Platine durch Ablängen gebildet wird, durch Laserwalzplattieren hergestellt wird. Beim Laserwalzplattieren wird der Plattierprozess durch Einbringen von thermischer Energie in den Walzspalt unterstützt. Die beiden zu verbindenden Werkstoffe werden unmittelbar vor dem Walzprozess mittels Laserstrahlung auf eine Temperatur etwas unterhalb ihrer jeweiligen Schmelztemperatur erwärmt. Die intermetallische Diffusion zwischen den Werkstoffen wird dadurch in der Fügezone stark erhöht, so dass bereits bei sehr geringen Umformgraden im Walzprozess eine stoffschlüssige Verbindung mit hoher Haltekraft entsteht. Umformgrade von 5 bis 10 % können ausreichend sein. Dies hat den Vorteil, dass nach dem Plattieren die Dicke des zweiten Streifens in dem Bereich, in dem er mit dem ersten Streifen verbunden ist, nur geringfügig kleiner ist als im Bereich der Überstände, die nicht mit dem ersten Streifen verbunden sind.

Bei einer weiteren bevorzugten Ausgestaltung der erfinderischen Herstellverfahren können in die Überstände des zweiten Streifens voneinander beabstandete Ausnehmungen eingebracht werden. Die Ausnehmungen werden zweckmäßigerweise vor dem ersten Biegeschritt eingebracht. Die Ausnehmungen können durch einen Stanzprozess in die Platine eingebracht werden. Alternativ können sie bei Verwendung eines vorstehend beschriebenen Werkstoffverbundstreifens bereits vor dem Ablängen oder gleichzeitig mit dem Ablängen in die Überstände des zweiten Streifens des Werkstoffverbundstreifens eingebracht werden. Die Ausnehmungen bilden in der fertigen Bundlagerschale entsprechende Ausnehmungen in den Flanschen. Durch die Ausnehmungen werden die Zug- und Streckspannungen, die bei der Herstellung der Lagerschale durch die Biegeprozesse in den Flanschen auftreten, unterbrochen. Dadurch wird das Risiko einer Rissbildung in den Flanschen minimiert und die Planheit der Flansche wird verbessert.

Nach dem Formen der Bundlagerschale kann die Auflage im Radiallagerbereich beispielsweise durch Schleifen nachbearbeitet werden. Dadurch reduziert sich die Dicke der Auflage im Radiallagerbereich weiter, während die Dicke der Anlaufflächen unverändert bleibt.

Ausführungsbeispiele der Erfindung werden anhand der schematischen Zeichnungen näher erläutert.

Darin zeigen:
Fig. 1 eine Gesamtansicht einer erfindungsgemäßen Bundlagerschale
Fig. 2 einen Querschnitt einer erfindungsgemäßen Bundlagerschale
Fig. 3 die Schrittabfolge beim ersten erfindungsgemäßen Herstellungsverfahren
Fig. 4 die Schrittabfolge beim zweiten erfindungsgemäßen Herstellungsverfahren

Einander entsprechende Teile sind in allen Figuren mit denselben Bezugszeichen versehen.

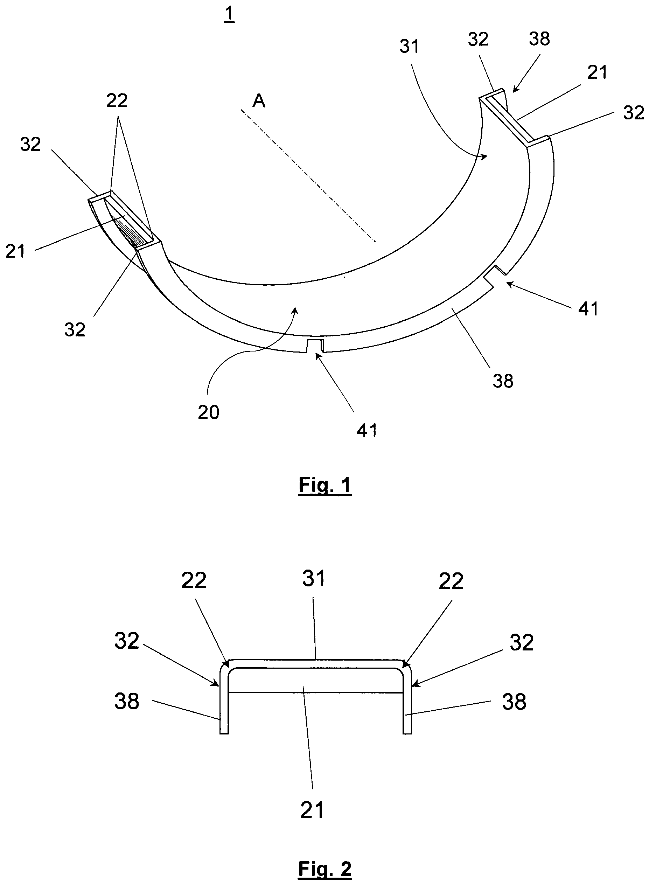

Fig. 1 zeigt eine Gesamtansicht einer erfindungsgemäßen Bundlagerschale 1. Die Bundlagerschale 1 weist einen halbzylindrischen Lagerbereich 20 sowie zwei sich in Achsrichtung seitlich daran anschließende Flansche 38 auf. Die Zylinderachse A der Bundlagerschale 1 ist durch die entsprechende bezeichnete Linie dargestellt. Der halbzylindrische Lagerbereich 20 wird durch einen Stützkörper 21 und eine radial innen liegende, mit dem Stützkörper 21 flächig verbundene Auflage 31 gebildet. Der Stützkörper 21 hat die Form eines gebogenen Streifens. Der Stützkörper 21 besteht aus einem Werkstoff mit hoher Festigkeit. Die Auflage 31 weist beidseitig Überstände 32 über den Stützkörper 21 auf. Die Überstände 32 sind um 90° in Radialrichtung nach außen über die Längskanten 22 des Stützkörpers 21 gebogen, so dass sie die Flansche 38 bilden. Die Auflage 31 und die Flansche 38 sind monolithisch ausgebildet und bestehen aus einem Werkstoff, der weicher als der Werkstoff des Stützkörpers 21 ist. Die Flansche 38 erstrecken sich in radialer Richtung deutlich über den Stützkörper 21 hinaus. In den Abschnitten der Flansch 38, die sich über den Stützkörper 21 hinaus erstrecken, liegt lediglich der weichere Werkstoff, nicht jedoch der Werkstoff des Stützkörpers 21 vor. Die Flansche weisen ferner Aussparungen 41 auf.

Fig. 2 zeigt schematisch den Querschnitt der erfindungsgemäßen Bundlagerschale 1 gemäß Fig. 1. Der Stützkörper 21 weist einen rechteckigen Querschnitt auf. Die Längskanten 22 des Stützkörpers 21, die der Auflage 31 zugewandt sind, sind verrundet. Die Auflage 31 ist deutlich dünner als der Stützkörper 21. Die Auflage 31 weist zwei monolithisch mit der Auflage 31 verbundene Überstände 32 über den Stützkörper 21 auf. Die Überstände 32 sind um 90° über die Längskanten 22 des Stützkörpers 21 gebogen und bilden Flansche 38. Aufgrund der Verrundung der Längskanten 22 des Stützkörpers 21 lässt sich das Material der Auflage 31 gut über die Längskanten 22 biegen und schmiegt sich an die Kontur des Stützkörpers 21 an. Die Flansche 38 erstrecken sich deutlich über den Stützkörper 21 hinaus. In den Abschnitten der Flansche 38, die sich über den Stützkörper 21 hinaus erstrecken, liegt lediglich der Werkstoff der Auflage 31, nicht jedoch der Werkstoff des Stützkörpers 21 vor.

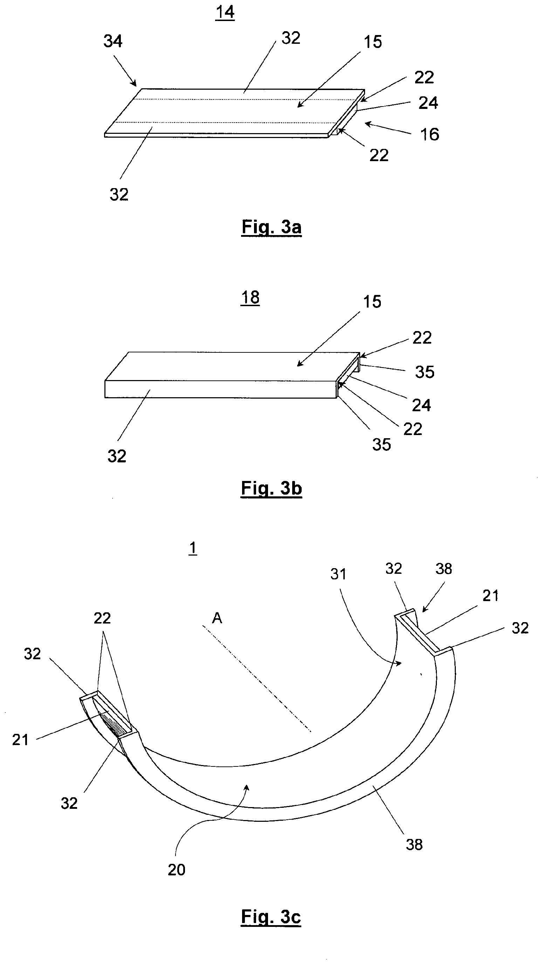

Fig. 3 zeigt mit ihren Teilfiguren 3a, 3b und 3c die Schrittabfolge beim ersten erfindungsgemäßen Herstellungsverfahren. Für das Herstellungsverfahren wird die in Fig. 3a schematisch dargestellte Platine 14 verwendet. Die Platine besteht aus einem ersten Steifen 24 aus einem ersten Werkstoff und einem zweiten Streifen 34 aus einem zweiten Werkstoff, der weicher als der erste Werkstoff ist. Die Breite des zweiten Streifens 34 ist größer als die Breite des ersten Streifens 24. Die beiden Streifen 24, 34 sind mit jeweils zueinander parallel verlaufenden Rändern derart miteinander flächig verbunden, dass der zweite Streifen 34 jeweils einen Überstand 32 über die beiden Längskanten 22 des ersten Streifens 24 aufweist. In Fig. 3a sind die beiden Überstände 32 durch gestrichelte Linien angedeutet. Die Überstände 32 sind symmetrisch ausgeführt. Der erste Streifen 24 ist vollflächig mit dem zweiten Streifen 34 im Bereich zwischen dessen Überständen 32 verbunden. Die Platine 14 weist somit einen zentralen Bereich 15 auf, der als Werkstoffverbund ausgebildet ist. Die Platine 1 stellt damit einen partiellen Werkstoffverbund dar, wie an ihrer Stirnfläche 16 ersichtlich ist.

Fig. 3b zeigt ein U-Profil 18, das aus der Platine gemäß Fig. 3a geformt wurde, indem die Überstände 32 rechtwinklig über die Längskanten 22 des ersten Streifens 24 gebogen wurden. Die ebene Basis des U-Profils 18 wird durch den zentralen Bereich 15 der Platine 14 gebildet. Die umgebogenen Überstände 32 bilden parallele Schenkel 35, zwischen denen sich der erste Streifen 24 befindet.

Fig. 3c zeigt eine erfindungsgemäße Bundlagerschale 1, die aus dem U-Profil 18 gemäß Fig. 3b hergestellt wurde, indem das U-Profil 18 zu einer Halbschale gebogen wurde. Die Biegeachse A ist durch die entsprechend gekennzeichnete Linie dargestellt. Die Biegeachse A steht senkrecht auf den Ebenen, die durch die umgebogenen Überstände 32 definiert werden. Aus dem ersten Streifen 24 wurde der Stützkörper 21 der Bundlagerschale 1 gebildet. Aus dem Bereich des zweiten Streifen 34, der sich zwischen den Überständen 32 befand, wurde die Auflage 31 auf dem Stützkörper 21 gebildet. Stützkörper 21 und Auflage 31 bilden den halbzylindrischen Lagerbereich 20 der Bundlagerschale 1. Die umgebogenen Überstände 32 bilden Flansche 38, die sich wie Segmente von Kreisringscheiben in Radial- und Umfangsrichtung erstrecken. Die in Fig. 3c dargestellte Bundlagerschale 1 ist mit Ausnahme der hier nicht dargestellten Ausnehmungen 41 in den Flanschen identisch zu der in Fig. 1 dargestellten Bundlagerschale.

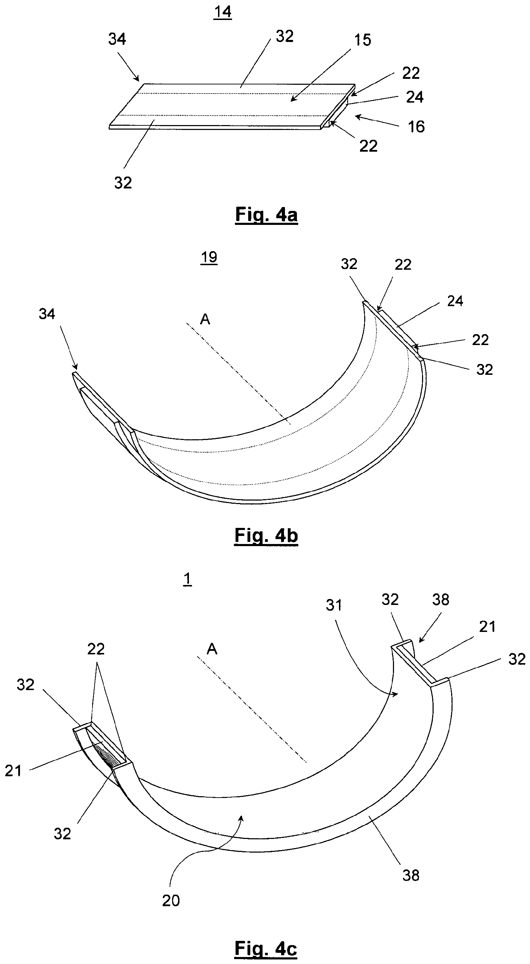

Fig. 4 zeigt mit ihren Teilfiguren 4a, 4b und 4c die Schrittabfolge beim zweiten erfindungsgemäßen Herstellungsverfahren. Für das zweite Herstellverfahren wird die in Fig. 4a schematisch dargestellte Platine 14 verwendet. Sie ist im Wesentlichen identisch zu der in Fig. 3a dargestellten Platine 14, die beim ersten erfinderischen Herstellverfahren verwendet wird.

Fig. 4b zeigt eine halbzylindrische Schale 19, die aus der Platine 14 gemäß Fig. 4a geformt wurde, indem die Platine 14 um die in Fig. 4b dargestellte Biegeachse A gebogen wurde. Der erste Streifen 24 befindet sich radial außen, der zweite Streifen 34 befindet sich radial innen. Der zweite Streifen 34 weist analog zu Fig. 4a seitliche Überstände 32 über den ersten Streifen 24 auf. Die Überstände 32 sind durch gestrichelte Linien angedeutet. Das Profil der halbzylindrischen Schale 19 ist im Wesentlichen gleich dem Profil der Platine 14.

Fig. 4c zeigt eine erfindungsgemäße Bundlagerschale 1, die aus der in Fig. 4b dargestellten halbzylindrischen Schale 19 geformt wurde, indem die Überstände 32 um 90° in Radialrichtung nach außen über die Längskanten 22 des ersten Streifens 24 gebogen wurden. Aus dem ersten Streifen 24 wurde somit der Stützkörper 21 der Bundlagerschale 1 gebildet. Aus dem Bereich des zweiten Streifen 34, der sich zwischen den Überständen 32 befand, wurde die Auflage 31 des Stützkörpers 21 gebildet. Stützkörper 21 und Auflage 31 bilden den halbzylindrischen Lagerbereich 20 der Bundlagerschale 1. Die umgebogenen Überstände 32 bilden Flansche 38, die sich wie Segmente von Kreisringscheiben in Radial- und Umfangsrichtung erstrecken. Die in Fig. 4c dargestellte Bundlagerschale 1 ist mit Ausnahme der hier nicht dargestellten Ausnehmungen 41 in den Flanschen identisch zu der in Fig. 1 dargestellten Bundlagerschale.

### Bezugszeichenliste

- 1: Bundlagerschale
- 14: Platine
- 15: zentraler Bereich
- 16: Stirnfläche
- 18: U-Profil
- 19: halbzylindrische Schale
- 20: halbzylindrischer Lagerbereich
- 21: Stützkörper
- 22: Längskante
- 24: erster Streifen
- 31: Auflage
- 32: Überstand
- 34: zweiter Streifen
- 35: Schenkel
- 38: Flansch
- 41: Ausnehmungen

- A: Achse

## Patentansprüche

1. Bundlagerschale (1) mit einem halbzylindrischen Lagerbereich (20), durch welchen eine Axialrichtung, eine Radialrichtung und eine Umfangsrichtung definiert werden,
wobei der halbzylindrische Lagerbereich (20) einen aus einem ersten Werkstoff gebildeten Stützkörper (21) und eine mit dem Stützkörper (21) flächig verbundene, in Radialrichtung innen liegende Auflage (31) aus einem zweiten Werkstoff umfasst, welcher weicher als der erste Werkstoff ist,
und wobei der Stützkörper (21) in Form eines zu einer halbzylindrischen Schale gebogenen Streifens mit im Wesentlichen rechteckigen Querschnitt gebildet und in Axialrichtung durch Längskanten (22) begrenzt ist, **dadurch gekennzeichnet,**
**dass** die Auflage (31) jeweils einen aus dem zweiten Werkstoff bestehenden Überstand (32) in Axialrichtung über die Längskanten (22) des Stützkörpers (21) aufweist und die Überstände (32) in Radialrichtung nach außen derart umgebogen sind, dass sie sich in Radialrichtung über den Stützkörper (21) hinaus erstrecken und so aus den Überständen (32) der Auflage (31) Flansche (38) gebildet sind, die sich jeweils in Axialrichtung an den halbzylindrischen Lagerbereich (20) anschließen.

2. Bundlagerschale (1) nach Anspruch 1, **dadurch gekennzeichnet,**
**dass** die Längskanten (22) des Stützkörpers (21), die der Auflage (31) zugewandt sind, verrundet sind und der Rundungsradius 0,5 bis 2 mm beträgt.

3. Bundlagerschale (1) nach Anspruch 1 oder 2, **dadurch gekennzeichnet, dass** auf dem zweiten Werkstoff zumindest partiell eine Beschichtung aufgebracht ist.

4. Bundlagerschale (1) nach einem der Ansprüche 1 bis 3, **dadurch gekennzeichnet, dass** der Stützkörper (21) und die Auflage (31) stoffschlüssig miteinander verbunden sind.

5. Bundlagerschale (1) nach einem der Ansprüche 1 bis 4, **dadurch gekennzeichnet, dass** der erste Werkstoff ein Stahlwerkstoff ist.

6. Bundlagerschale (1) nach einem der Ansprüche 1 bis 5, **dadurch gekennzeichnet, dass** der zweite Werkstoff ein metallischer Lagerwerkstoff, insbesondere eine Kupferlegierung oder eine Aluminiumlegierung ist.

7. Bundlagerschale (1) nach Anspruch 6, **dadurch gekennzeichnet, dass** der Stützkörper (21) und die Auflage (31) durch Plattieren miteinander verbunden sind.

8. Bundlagerschale (1) nach einem der Ansprüche 1 bis 5, **dadurch gekennzeichnet, dass** der zweite Werkstoff ein Kunststoff ist.

9. Bundlagerschale (1) nach einem der Ansprüche 1 bis 8, **dadurch gekennzeichnet, dass** die Flansche (38) in Umfangsrichtung voneinander beabstandete Ausnehmungen (41) aufweisen.

10. Verfahren zur Herstellung einer Bundlagerschale (1) nach einem der Ansprüche 1 bis 9, wobei das Verfahren folgende Schritte umfasst:
a) Bereitstellen einer Platine (14), die einen ersten Steifen (24) aus einem ersten Werkstoff und einen zweiten Streifen (34) aus einem zweiten Werkstoff, der weicher als der erste Werkstoff ist, umfasst, wobei die Breite des zweiten Streifens (34) größer als die Breite des ersten Streifens (24) ist, und die beiden Streifen (24, 34) mit zueinander parallel verlaufenden Rändern derart miteinander flächig verbunden sind, dass der zweite Streifen (34) jeweils einen Überstand (32) über die beiden Längskanten (22) des ersten Streifens (24) aufweist und dass der erste Streifen (24) flächig mit dem zweiten Streifen (34) im Bereich zwischen dessen Überständen (32) verbunden ist, so dass die Platine (14) einen zentralen Bereich (15) aufweist, der als Werkstoffverbund ausgebildet ist,
b) Profilieren der Platine (14) durch rechtwinkliges Umbiegen der Überstände (32) des zweiten Streifens (34) über die Längskanten (22) des ersten Streifens (24), so dass aus den umgebogenen Überständen (32) Schenkel (35) gebildet werden, zwischen denen sich der erste Streifen (24) befindet,
c) Biegen der profilierten Platine (14) aus Schritt b) zu einer Bundlagerschale (1) mit einem halbzylindrischen Lagerbereich (20) und mit zwei Flanschen (38), wobei der halbzylindrische Lagerbereich (20) aus dem zentralen Bereich (15) der Platine (14) gebildet wird und die Flansche (38) aus den umgebogenen Überständen (32) des zweiten Streifens (24) gebildet werden.

11. Verfahren zur Herstellung einer Bundlagerschale (1) nach einem der Ansprüche 1 bis 9, wobei das Verfahren folgende Schritte umfasst:
a) Bereitstellen einer Platine (14), die einen ersten Steifen (24) aus einem ersten Werkstoff und einen zweiten Streifen (34) aus einem zweiten Werkstoff, der weicher als der erste Werkstoff ist, umfasst, wobei die Breite des zweiten Streifens (34) größer als die Breite des ersten Streifens (24) ist, und die beiden Streifen (24, 34) mit zueinander parallel verlaufenden Rändern derart miteinander flächig verbunden sind, dass der zweite Streifen (34) jeweils einen Überstand (32) über die beiden Längskanten (22) des ersten Streifens (24) aufweist und dass der erste Streifen (24) flächig mit dem zweiten Streifen (34) im Bereich zwischen dessen Überständen (32) verbunden ist, so dass die Platine (1) einen zentralen Bereich (15) aufweist, der als Werkstoffverbund ausgebildet ist,
b) Biegen der Platine (1) zu einer halbzylindrischen Schale (19) mit einer Zylinderachse (A), so dass sich der erste Streifen (24) bezogen auf die Zylinderachse in Radialrichtung außen befindet und dass sich der zentrale Bereich (15) der Platine in Richtung der Zylinderachse zwischen den Überständen (32) des zweiten Streifens (34) befindet,
c) rechtwinkliges Umbiegen der Überstände (32) des zweiten Streifens (34) über die Längskanten (22) des ersten Streifens (24), so dass eine Bundlagerschale (1) mit einem halbzylindrischen Lagerbereich (20) und mit zwei Flanschen (38) gebildet wird, wobei der halbzylindrische Lagerbereich (20) aus dem zentralen Bereich (15) der Platine (14) gebildet wird und die Flansche (38) aus den umgebogenen Überständen (32) des zweiten Streifens (34) gebildet werden.

12. Verfahren nach Anspruch 10 oder 11, **dadurch gekennzeichnet,**
**dass** die Platine (1) durch Ablängen eines Werkstoffverbundstreifens gebildet wird.

13. Verfahren nach Anspruch 12 zur Herstellung einer Bundlagerschale (1) nach Anspruch 7, **dadurch gekennzeichnet, dass** der Werkstoffverbundstreifen durch Laserwalzplattieren gebildet wird.

14. Verfahren nach einem der Ansprüche 10 bis 13 zur Herstellung einer Bundlagerschale (1) nach Anspruch 9, **dadurch gekennzeichnet, dass** in die Überstände (32) des zweiten Streifens (34) voneinander beabstandete Ausnehmungen (41) eingebracht werden.

## Claims

1. Collar bearing shell (1) having a semi-cylindrical bearing region (20), by means of which an axial direction, a radial direction and a peripheral direction are defined,
wherein the semi-cylindrical bearing region (20) comprises a support member (21) which is formed from a first material and a support (31) which is connected in a planar manner to the support member (21) and which is located at the inner side in a radial direction and which comprises a second material which is softer than the first material,
and wherein the support member (21) is formed in the form of a strip which is bent to form a semi-cylindrical shell and which has a substantially rectangular cross-section and is delimited in an axial direction by means of longitudinal edges (22), **characterised in that**
the support (31) has in each case a projection (32) which comprises the second material in an axial direction over the longitudinal edges (22) of the support member (21) and the projections (32) are bent outwardly in a radial direction in such a manner that they extend in a radial direction beyond the support member (21) and thus there are formed from the projections (32) of the support (31) flanges (38) which in each case adjoin the semi-cylindrical bearing region (20) in an axial direction.

2. Collar bearing shell (1) according to claim 1, **characterised in that** the longitudinal edges (22) of the support member (21) which face the support (31) are rounded and the curvature radius is from 0.5 to 2 mm.

3. Collar bearing shell (1) according to claim 1 or claim 2,
**characterised in that** a coating is at least partially applied to the second material.

4. Collar bearing shell (1) according to any one of claims 1 to 3,
**characterised in that** the support member (21) and the support (31) are connected to each other in a materially engaging manner.

5. Collar bearing shell (1) according to any one of claims 1 to 4,
**characterised in that** the first material is a steel material.

6. Collar bearing shell (1) according to any one of claims 1 to 5,
**characterised in that** the second material is a metal bearing material, in particular a copper alloy or an aluminium alloy.

7. Collar bearing shell (1) according to claim 6, **characterised in that** the support member (21) and the support (31) are connected to each other by means of plating.

8. Collar bearing shell (1) according to any one of claims 1 to 5,
**characterised in that** the second material is a plastics material.

9. Collar bearing shell (1) according to any one of claims 1 to 8,
**characterised in that** the flanges (38) have recesses (41) which are spaced apart from each other in a peripheral direction.

10. Method for producing a collar bearing shell (1) according to any one of claims 1 to 9, wherein the method comprises the following steps:
a) providing a plate (14) which comprises a first strip (24) of a first material and a second strip (34) of a second material which is softer than the first material, wherein the width of the second strip (34) is greater than the width of the first strip (24), and the two strips (24, 34) are connected to each other with edges extending mutually parallel in such a planar manner that the second strip (34) in each case has a projection (32) over the two longitudinal edges (22) of the first strip (24) and the first strip (24) is connected in a planar manner to the second strip (34) in the region between the projections (32) thereof so that the plate (14) has a central region (15) which is constructed as a composite material,
b) profiling the plate (14) by bending the projections (32) of the second strip (34) at right-angles over the longitudinal edges (22) of the first strip (24) so that there are formed from the bent projections (32) members (35) between which the first strip (24) is located,
c) bending the profiled plate (14) from step (b) to form a collar bearing shell (1) having a semi-cylindrical bearing region (20) and having two flanges (38), wherein the semi-cylindrical bearing region (2) is formed from the central region (15) of the plate (14) and the flanges (38) are formed from the bent projections (32) of the second strip (24).

11. Method for producing a collar bearing shell (1) according to any one of claims 1 to 9, wherein the method comprises the following steps:
a) providing a plate (1) which comprises a first strip (24) of a first material and a second strip (34) of a second material which is softer than the first material, wherein the width of the second strip (34) is greater than the width of the first strip (24), and the two strips (24, 34) are connected to each other with edges extending mutually parallel in such a planar manner that the second strip (34) in each case has a projection (32) over the two longitudinal edges (22) of the first strip (24) and the first strip (24) is connected in a planar manner to the second strip (34) in the region between the projections (32) thereof so that the plate (1) has a central region (15) which is constructed as a composite material,
b) bending the plate (1) to form a semi-cylindrical shell (19) having a cylinder axis (A) so that the first strip (24) with respect to the cylinder axis is located in a radial direction at the outer side and the central region (15) of the plate is located in the direction of the cylinder axis between the projections (32) of the second strip (34),
c) bending the projections (32) of the second strip (34) over the longitudinal edges (22) of the first strip (24) at right-angles so that a collar bearing shell (1) having a semi-cylindrical bearing region (20) and having two flanges (38) is formed, wherein the semi-cylindrical bearing region (20) is formed from the central region (15) of the plate (14) and the flanges (38) are formed from the bent projections (32) of the second strip (34).

12. Method according to claim 10 or claim 11, **characterised in that** the plate (1) is formed by cutting to length a composite material strip.

13. Method according to claim 12 for producing a collar bearing shell (1) according to claim 7, **characterised in that** the composite material strip is formed by means of laser roll-bonding.

14. Method according to any one of claims 10 to 13 for producing a collar bearing shell (1) according to claim 9, **characterised in that** recesses (41) which are spaced apart from each other are introduced into the projections (32) of the second strip (34).

## Revendications

1. Coquille de coussinet à bride (1) avec une zone de support semi-cylindrique (20), par laquelle une direction axiale, une direction radiale et une direction périphérique sont définies,
dans laquelle la zone de support semi-cylindrique (20) comprend un corps d'appui (21) formé d'un premier matériau et un support (31) relié à plat au corps d'appui (21), situé à l'intérieur dans la direction radiale, composé d'un deuxième matériau, lequel est plus souple que le premier matériau,
et dans lequel le corps d'appui (21) est formé sous forme d'une bande fléchie en une coque semi-cylindrique, à section transversale sensiblement rectangulaire, et est délimité dans la direction axiale par des bords longitudinaux (22),
**caractérisée en ce**
**que** le support (31) présente respectivement une partie saillante (32) constituée du deuxième matériau dans la direction axiale au-dessus des bords longitudinaux (22) du corps d'appui (21) et les parties saillantes (32) sont repliées vers l'extérieur dans la direction radiale de telle sorte qu'elles s'étendent dans la direction radiale au-delà du corps d'appui (21) et que des brides (38), qui se raccordent respectivement dans la direction axiale à la zone de support semi-cylindrique (20), sont formées des parties saillantes (32) du support (31).

2. Coquille de coussinet à bride (1) selon la revendication 1, **caractérisée en ce**
**que** les bords longitudinaux (22) du corps d'appui (21), qui sont tournés vers le support (31), sont arrondis et le rayon d'arrondi atteint 0,5 à 2 mm.

3. Coquille de coussinet à bride (1) selon la revendication 1 ou 2, **caractérisée en ce qu'**un revêtement est appliqué au moins en partie sur le deuxième matériau.

4. Coquille de coussinet à bride (1) selon l'une quelconque des revendications 1 à 3, **caractérisée en ce que** le corps d'appui (21) et le support (31) sont reliés l'un à l'autre par liaison de matières.

5. Coquille de coussinet à bride (1) selon l'une quelconque des revendications 1 à 4, **caractérisée en ce que** le premier matériau est un matériau acier.

6. Coquille de coussinet à bride (1) selon l'une quelconque des revendications 1 à 5, **caractérisée en ce que** le deuxième matériau est un matériau antifriction métallique, en particulier un alliage de cuivre ou un alliage d'aluminium.

7. Coquille de coussinet à bride (1) selon la revendication 6, **caractérisée en ce que** le corps d'appui (21) et le support (31) sont reliés l'un à l'autre par placage.

8. Coquille de coussinet à bride (1) selon l'une quelconque des revendications 1 à 5, **caractérisée en ce que** le deuxième matériau est un plastique.

9. Coquille de coussinet à bride (1) selon l'une quelconque des revendications 1 à 8, **caractérisée en ce que** les brides (38) présentent des évidements (41) espacés les uns des autres dans la direction périphérique.

10. Procédé de fabrication d'une coquille de coussinet à bride (1) selon l'une quelconque des revendications 1 à 9, dans lequel le procédé comprend les étapes suivantes :
a) la fourniture d'une platine (14), qui comprend une première bande (24) composée d'un premier matériau et une deuxième bande (34) composée d'un deuxième matériau, qui est plus souple que le premier matériau, dans lequel la largeur de la deuxième bande (34) est supérieure à la largeur de la première bande (24), et les deux bandes (24, 34) sont reliées l'une à l'autre à plat avec des bords s'étendant parallèlement les uns aux autres, de telle sorte que la deuxième bande (34) présente respectivement une partie saillante (32) au-dessus des deux bords longitudinaux (22) de la première bande (24) et que la première bande (24) est reliée à plat à la deuxième bande (34) dans la zone entre les parties saillantes (32) de celle-ci, de sorte que la platine (14) présente une zone centrale (15) qui est réalisée en tant que composite de matériaux,
b) le profilage de la platine (14) par repliage à angle droit des parties saillantes (32) de la deuxième bande (34) au-dessus des bords longitudinaux (22) de la première bande (24), de sorte que des branches (35), entre lesquelles se trouve la première bande (24), sont formées à partir des parties saillantes (32) repliées,
c) le pliage de la platine (14) profilée à partir de l'étape b) en une coquille de coussinet à bride (1) avec une zone de support semi-cylindrique (20) et avec deux brides (38), dans lequel la zone de support semi-cylindrique (20) est formée de la zone centrale (15) de la platine (14) et les brides (38) sont formées des parties saillantes (32) repliées de la deuxième bande (24).

11. Procédé de fabrication d'une coquille de coussinet à bride (1) selon l'une quelconque des revendications 1 à 9, dans lequel le procédé comprend les étapes suivantes :
a) la fourniture d'une platine (14), qui comprend une première bande (24) composée d'un premier matériau et une deuxième bande (34) composée d'un deuxième matériau, qui est plus souple que le premier matériau, dans lequel la largeur de la deuxième bande (34) est supérieure à la largeur de la première bande (24), et les deux bandes (24, 34) sont reliées l'une à l'autre à plat avec des bords s'étendant parallèlement les uns aux autres, de telle sorte que la deuxième bande (34) présente respectivement une partie saillante (32) au-dessus des deux bords longitudinaux (22) de la première bande (24) et que la première bande (24) est reliée à plat à la deuxième bande (34) dans la zone entre les parties saillantes (32) de celle-ci, de sorte que la platine (14) présente une zone centrale (15) qui est réalisée en tant que composite de matériaux,
b) le pliage de la platine (1) en une coque semi-cylindrique (19) avec un axe de cylindre (A), de sorte que la première bande (24), rapportée à l'axe de cylindre, se trouve à l'extérieur dans la direction radiale et que la zone centrale (15) de la platine en direction de l'axe de cylindre se trouve entre les parties saillantes (32) de la deuxième bande (34),
c) le repliage à angle droit des parties saillantes (32) de la deuxième bande (34) au-dessus des bords longitudinaux (22) de la première bande (24), de sorte qu'une coquille de coussinet à bride (1) avec une zone de support semi-cylindrique (20) et avec deux brides (38) est formée, dans lequel la zone de support semi-cylindrique (20) est formée de la zone centrale (15) de la platine (14) et les brides (38) sont formées des parties saillantes (32) repliées de la deuxième bande (34).

12. Procédé selon la revendication 10 ou 11, **caractérisé en ce que** la platine (1) est formée par mise à la longueur d'une bande de composite de matériaux.

13. Procédé selon la revendication 12 pour fabriquer une coquille de coussinet à bride (1) selon la revendication 7, **caractérisé en ce que** la bande de composite de matériaux est formée par placage par laminage laser.

14. Procédé selon l'une quelconque des revendications 10 à 13 pour la fabrication d'une coquille de coussinet à bride (1) selon la revendication 9, **caractérisé en ce que** des évidements (41) espacés les uns des autres sont introduits dans les parties saillantes (32) de la deuxième bande (34).
